# EUROPEAN PATENT APPLICATION

(11) **EP 2 899 614 A1**
(43) Date of publication of application: **29.07.2015**
(21) Application number: 15152133.3
(22) Date of filing: 22.01.2015
(51) Int. Cl.: G06F 3/041, G06F 3/044

(54) **METHOD FOR OBTAINING TOUCH INPUT IN ELECTRONIC DEVICE COMBINING SELF AND MUTUAL CAPACITANCE MEASUREMENTS**

(30) Priority: 22.01.2014 KR 20140007825
(71) Applicant: Samsung Electronics Co., Ltd, Gyeonggi-do 443-742 (KR)
(72) Inventor: Kim, Chang-Jin, 443-742 Gyeonggi-do (KR); Kwon, Jung-Tae, 443-742 Gyeonggi-do (KR); Kim, Dong-Sub, 443-742 Gyeonggi-do (KR); Lee, Heon-Seok, 443-742 Gyeonggi-do (KR)
(74) Representative: Jenkins, Richard Gavin

(57) **Abstract**

A method for an electronic device to control a function in response to an input is provided. The method includes detecting a plurality of touch inputs of at least one object located outside the electronic device, through a touch sensor functionally connected with the electronic device, detecting a proximity input of the at least one object, and determining at least one of the plurality of touch inputs as an input for controlling the electronic device, based on the proximity input.

## Description

### TECHNICAL FIELD

The present disclosure relates to a method and an apparatus for obtaining a user input using a touch sensor. More particularly, the present disclosure relates to a method for obtaining a user input using a touch sensor, which may identify an intentional input of a user from a contact or an approach of at least one object.

### BACKGROUND

Electronic devices may execute various functions or programs. For example, portable electronic devices, such as, a smart phone or a tablet computer, have developed to implement enhanced performance and to provide users with a great convenience. Electronic devices provide various user interfaces so as to communicate, to a user, information associated with functions or programs that may be executed in the electronic devices.

An input and output method appropriate for a function, a type, a usage environment, and the like, of an electronic device may exist and thus, there may be various user interfaces. A touch sensor (for example, a touch screen) has been applied more and more to an electronic device, and an electronic device has provided users with intuitive interfaces through which the electronic device is controlled or a command is input.

For example, a user enables an input instrument, such as a stylus, a finger, or the like, to be in contact with a touch sensor, so as to provide a gesture input or a handwriting input. In addition, a user, for example, may locate an object that a touch sensor may detect (for example, a body part of the user, another electronic device, or the like) to be proximate to the touch sensor, so as to control at least a few functions of the electronic device.

While a user provides a user input to a touch sensor (for example, a touch screen) using an object (for example, a stylus, a finger, or the like), another object (for example, a palm, or the like) may touch or approach the touch sensor. According to the related art, the touch sensor may detect a contact and/or an approach of a plurality of objects on the touch sensor, as a user input. A contact or an approach of an object that is different from an input instrument is detected as a user input and thus, a function that is not intended by a user may be executed in an electronic device.

The input that is not intended by the user may be generated, for example, when the touch sensor detects a hand that holds a stylus while a user provides an input using the stylus through the touch sensor. In addition, the input that is not intended by the user may be generated, for example, when a user provides an input through the touch sensor with one hand using a stylus or a finger and the touch sensor detects a part of the other hand that holds the electronic device. Due to the contact or the approach unintentionally generated on the touch sensor, a function that is undesired by the user may be executed in the electronic device.

The input that is not intended by the user may be generated, for example, when the touch sensor detects a hand that holds a stylus while a user provides an input using the stylus through the touch sensor. In addition, the input that is not intended by the user may be generated, for example, when a user provides an input through the touch sensor with one hand using a stylus or a finger and the touch sensor detects a part of the other hand that holds the electronic device. Due to the contact or the approach unintentionally generated on the touch sensor, a function that is undesired by the user may be executed in the electronic device.

In addition, when a few of the menus that may be selectable through a touch screen is deactivated so as to reduce an input error, intentional input of the user as well as unintentional input of the user may not be detected for the few deactivated menus.

Therefore, a need exists for a method and an apparatus for obtaining a user input using a touch sensor, which may identify an intentional input of a user from a contact or an approach of at least one object.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and an apparatus for obtaining a user input using a touch sensor, which may identify an intentional input of a user from a contact or an approach of at least one object.

In accordance with an aspect of the present disclosure, a method of obtaining an input in an electronic device is provided. The method includes detecting at least one object located outside the electronic device, using a touch sensor functionally connected with the electronic device, measuring a self capacitance and a mutual capacitance corresponding to the at least one object together, through the touch sensor, determining whether to recognize a touch or a proximity of the at least one object with respect to the electronic device as an input for controlling a function of the electronic device, based on at least the self capacitance, and controlling the function based on the determination.

In accordance with another aspect of the present disclosure, a method of obtaining an input using a touch sensor in an electronic device is provided. The method includes detecting a plurality of touch inputs of at least one object located outside the electronic device, through a touch sensor functionally connected with the electronic device, detecting a proximity input of the at least one object, measuring a self capacitance and a mutual capacitance corresponding to the at least one object through the touch sensor simultaneously, and determining at least one of the plurality of touch inputs as an input for controlling the electronic device, based on the proximity input.

In accordance with another aspect of the present disclosure, an electronic device is provided. The electronic device includes a touch sensor that measures a self capacitance and a mutual capacitance corresponding to at least one external object simultaneously, a detecting module configured to detect the at least one object, using the touch sensor, a determining module configured to determine whether to recognize a touch or a proximity of the at least one object as an input for controlling a function of the electronic device, based on the self capacitance, and a function control module configured to control the function, based on the determination.

An electronic device and a method according to various embodiments of the present disclosure, for example, may identify an input of an input instrument from a contact or an approach of at least one object, and may recognize the identified input as an intentional input of a user and thus, the accuracy of the recognition of an input may be increased. In addition, the function of the electronic device may be controlled to be appropriate for the intentional input of the user, and unintentional input may be rejected and thus, user convenience may be improved.

Other aspects, advantages, and salient features of the disclosure will become apparent to those skilled in the art from the following detailed description, which, taken in conjunction with the annexed drawings, discloses various embodiments of the present disclosure.

Another aspect of the present disclosure provides a computer program comprising instructions arranged, when executed, to implement a method in accordance with any one of the above-described aspects. A further aspect provides machine-readable storage storing such a program.

Various respective aspects and features of the present disclosure are defined in the appended claims.

It is an aim of certain embodiments of the present disclosure to solve, mitigate or obviate, at least partly, at least one of the problems and/or disadvantages associated with the prior art. Certain embodiments aim to provide at least one of the advantages described below.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a network environment including an electronic device according to an embodiment of the present disclosure;
FIG. 2 illustrates a method in which an electronic device detects an external object according to an embodiment of the present disclosure;
FIGS. 3A, 3B, and 3C illustrate a method in which an electronic device identifies an input through a touch sensor according to an embodiment of the present disclosure;
FIG. 4 illustrates an input management module of an electronic device according to an embodiment of the present disclosure;
FIG. 5 is a flowchart illustrating a method of controlling a function in an electronic device in response to an input, according to an embodiment of the present disclosure;
FIG. 6 is a flowchart illustrating a method of controlling a function in an electronic device in response to an input, according to an embodiment of the present disclosure; and
FIG. 7 is a block diagram of an electronic device according to an embodiment of the present disclosure.

Throughout the drawings, it should be noted that like reference numbers are used to depict the same or similar elements, features, and structures.

### DETAILED DESCRIPTION

The following description with reference to accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. In particular, where the indefinite article is used, the specification is to be understood as contemplating plurality as well as singularity, unless the context requires otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

Throughout the description and claims of this specification, the words "comprise" and "contain" and variations of these words, for example "comprising" and "comprises", mean "including but not limited to", and are not intended to (and do not) exclude other components, integers or steps. Likewise, the terms "include" or "may include", which may be used in various embodiments of the present disclosure, refer to the presence of disclosed functions, operations or elements, and do not restrict the addition of one or more functions, operations or elements. In the present disclosure, the terms such as "include" and/or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

In various embodiments of the present disclosure, the expression "or" includes any or all combinations of words enumerated together. For example, the expression "A or B" may include A, may include B, or may include both A and B. For example, the expression "A or B" may include A, may include B, or may include both A and B.

The expressions such as "first" "second," or the like used in various embodiments of the present disclosure may modify various component elements in the various embodiments but may not limit corresponding component elements. For example, the above expressions do not limit the sequence and/or importance of the elements. The above expressions are used merely for the purpose to distinguish an element from the other elements. For example, a first user device and a second user device indicate different user devices although both of them are user devices. For example, without departing from the scope of the present disclosure, a first component element may be named a second component element. Similarly, the second component element also may be named the first component element.

When a component is referred to as being "connected" or 'accessed" to any other component, it should be understood that the component may be directly connected or accessed to the other component, but another new component may also be interposed between them. In contrast, when it is stated that a component is directly "coupled to" or "connected to" another component, a new component does not exist between the component and another component.

As used herein, terms are used merely for describing specific various embodiments and are not intended to limit the present disclosure. Singular forms are intended to include plural forms unless the context clearly indicates otherwise.

Unless defined differently, all terms used herein, which include technical terminologies or scientific terminologies, have the same meaning as a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present disclosure.

An electronic device according to various embodiments of the present disclosure may be a device including a touch sensor. For example, the electronic device may include at least one of a smart phone, a tablet Personal Computer (PC), a mobile phone, a video phone, an e-book reader, a desktop PC, a laptop PC, a netbook computer, a Personal Digital Assistant (PDA), a Portable Multimedia Player (PMP), a Motion Pictures Expert Group (MPEG-1 or MPEG-2) Audio Layer 3 (MP3) player, a mobile medical device, a camera, a wearable device (for example, a Head-Mounted-Device (HMD), such as electronic glasses, electronic clothes, an electronic bracelet, an electronic necklace, an electronic appcessory, an electronic tattoo, a smart watch, and the like.

According to various embodiments of the present disclosure, the electronic device may be a smart home appliance with a touch sensor. For example, the smart home appliance may include at least one of a television, a Digital Video Disk (DVD) player, an audio, a refrigerator, an air conditioner, a vacuum cleaner, an oven, a microwave oven, a washing machine, an air cleaner, a set-top box, a TV box (e.g., Samsung HomeSyncTM, Apple TVTM, or Google TVTM), a game console, an electronic dictionary, an electronic key, a camcorder, and an electronic photo frame.

According to various embodiments of the present disclosure, the electronic device may include at least one of various types of medical devices (for example, Magnetic Resonance Angiography (MRA), Magnetic Resonance Imaging (MRI), Computed Tomography (CT), a scanning machine, ultrasonic wave device and the like), a navigation device, a Global Positioning System (GPS) receiver, an Event Data Recorder (EDR), a Flight Data Recorder (FDR), a car infotainment device, ship electronic equipment (for example, navigation equipment for a ship, a gyro compass and the like), avionics, a security device, and an industrial or home robot.

According to another embodiment of the present disclosure, the electronic devices may include at least one of furniture or a part of a building/structure having a communication function, electronic boards, electronic signature receiving devices, projectors, or various measuring equipment (e.g., equipment for a water supply, an electricity, gases or radio waves).

An electronic device according to various embodiments of the present disclosure may be a combination of one or more of above described various devices. In addition, electronic devices according to various embodiments of the present disclosure may be flexible devices. In addition, an electronic device according to various embodiments of the present disclosure is not limited to the above described devices.

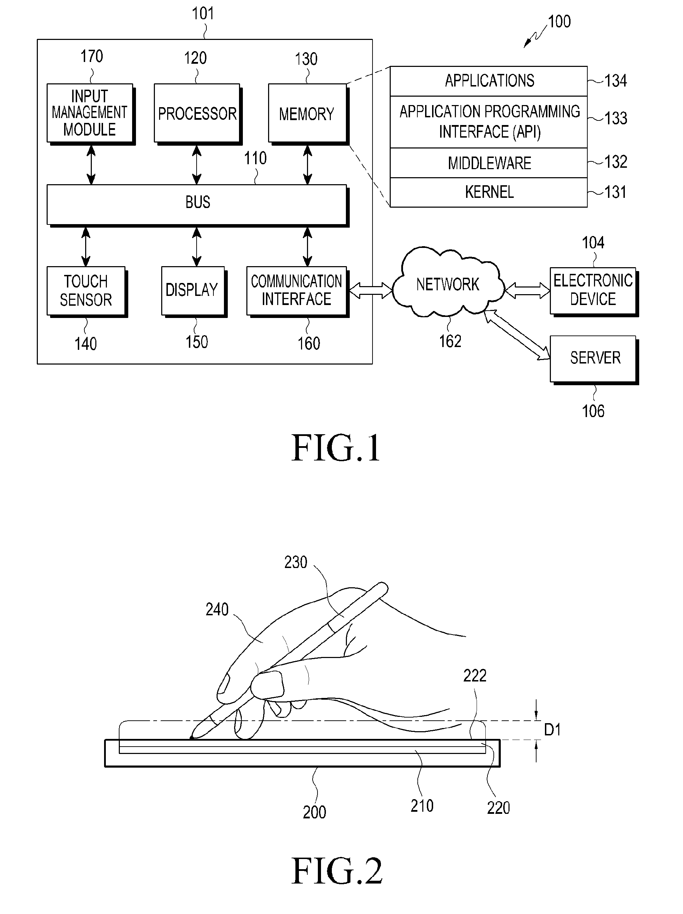

FIG. 1 illustrates a network environment including an electronic device according to an embodiment of the present disclosure.

FIG. 1 shows a network environment 100 including an electronic device 101, a further electronic device 104, and a server 106 connected to one another via a network 162. The electronic device 101 may include a bus 110, a processor 120, a memory 130, a touch sensor 140, a display 150, a communication interface 160, and an input management module 170.

The bus 110 may be a circuit to connect the above-described component elements with each other and to transfer a communication (for example, control messages) among the above-described component elements.

The processor 120 may receive instructions from the above-described component elements (for example, the memory 130, the touch sensor 140, the display 150, the communication interface 160, the input management module 170, or the like) through, for example, the bus 110, then decode the received instructions, and perform calculation or data processing according to the decoded instructions.

The memory 130 may store instructions or data received from the processor 120 or other component elements (for example, the touch sensor 140, the display 150, the communication interface 160, the input management module 170, or the like) or generated by the processor 120 or other component elements. The memory 130 may include programming modules, for example, a kernel 131, a middleware 132, an Application Programming Interface (API) 133, applications 134, or the like. Each of the programming modules described above may be configured by software, firmware, hardware, or a combination thereof.

The kernel 131 may control or manage system resources (for example, the bus 110, the processor 120, the memory 130, or the like) which are used in performing operations or functions implemented by other programming modules, for example, the middleware 132, the API 133 or the applications 134. Furthermore, the kernel 131 may provide an interface through which the middleware 132, the API 133, and the applications 134 may access individual component elements of the electronic device 101 to control or manage them.

The middleware 132 may serve as an intermediary such that the API 133 or the applications 134 communicates with the kernel 131 to transmit/receive data. Furthermore, in regard to task requests received from the applications 134, the middleware 132 may perform a control (for example, scheduling or load balancing) for the task requests using, for example, a method of assigning a priority for using the system resources (for example, the bus 110, the processor 120, and the memory 130) of the electronic device 101, to at least one of the applications 134.

The API 133 is an interface by which the applications 134 control functions provided from the kernel 131 or the middleware 132, and may include, for example, at least one interface or function (for example, instructions) for file control, window control, image processing, text control, or the like.

According to the various embodiments of the present disclosure, the applications 134 may include a Short Message Service (SMS)/Multimedia Message Service (MMS) application, an e-mail application, a calendar application, an alarm application, a health care application (for example, an application for measuring a work rate or a blood sugar), an environment information application (for example, an application for providing atmospheric pressure, humidity, or temperature information). Additionally or alternatively, the applications 134 may be an application related to the exchange of information between the electronic device 101 and external electronic devices (for example, an electronic device 104). The application associated with the information exchange may include, for example, a notification relay application for transferring specific information to the external electronic device or a device management application for managing the external electronic device.

For example, the notification relay application may include a function of transferring notification information generated in other applications (for example, the SMS/MMS application, the e-mail application, the health care application, or the environmental information application) of the electronic device 101 to an external electronic device (for example, the electronic device 104). Additionally or alternatively, the notification relay application may receive notification information from, for example, an external electronic device (for example, the electronic device 104), and provide the same to a user. The device management application, for example, may manage (for example, install, delete, or update) at least some functions (for example, turning external electronic device (or some elements) on or off or adjusting the brightness (or resolution) of a display) of an external electronic device (for example, the electronic device 104) that communicates with the electronic device 101, applications performed in the external electronic device, or services (for example, a phone call service, or a messaging service) provided in the external electronic device.

According to various embodiments of the present disclosure, the applications 134 may include applications that are designated according to the property (for example, the type of electronic device) of the external electronic device (for example, the electronic device 104). For example, in the case where the external electronic device is an MP3 player, the application 134 may include an application related to the playback of music. Similarly, in the case where the external electronic device is a mobile medical appliance, the application 134 may include an application related to health care. According to an embodiment of the present disclosure, the application 134 may include at least one of applications designated in the electronic device 101 or applications received from an external electronic device (for example, the server 106 or the electronic device 104).

The touch sensor 140 may detect an external object (for example, various objects that the touch sensor 140, including a stylus, a finger, and the like, may detect) that is in contact with or approaches at least a part of the electronic device 101. For example, the electronic device 101, as the touch sensor 140, may include an at least partially transparent or an opaque surface that may detect a contact input (or a touch input). Although FIG. 1 illustrates that the touch sensor 140 is included in a part of the electronic device 101, the touch sensor 140 may be outside the electronic device 101, being connected, by a wire or wirelessly, with the electronic device 101 through various interfaces.

The touch sensor 140 may be a touch screen, which is embodied to be optically transparent and is included in the front side or back side of the display 150. For example, the touch screen may be formed to be a separate touch screen module and may be layered on the display 150. The touch screen may be integrated into the display 150 using, for example, in-cell or on-cell technologies. The touch screen determines the locations of reactions generated on the touch screen, in association with a user input (for example, a gesture input, a touch input, a hovering input, or the like), so as to recognize the user input as a command to be executed in the electronic device 101. According to an embodiment of the present disclosure, at least a part of the touch screen may overlap a visual region of the display 150, and may recognize a user selection of a Graphical User Interface (GUI) that is displayed through the display 150.

The touch sensor 140 may operate by interacting with, for example, a touch controller and software. The touch sensor 140 according to an embodiment of the present disclosure may transmit a corresponding signal to the touch controller in response to a contact or an approach of an external object. The touch controller, for example, may variously process (for example, analog to digital conversion, bias elimination, and the like) the received signal, and may generate data based on a processed result. The touch controller may be embodied as a separate IC, or may be included in the input management module 170 or the processor 120 to be embodied in a software or hardware manner. The software may execute operations, for example, input coordinates extraction, data identification, and the like, so as to determine data corresponding to the contact or approach to be an input that the electronic device 101 may recognize. The operations of the software may be embodied by hardware, for example, Field-Programmable Gate Array (FPGA) and the like.

To detect an external object, various technologies may be used for the touch sensor 140, and a resistive scheme, a capacitive scheme, an infra-red scheme, an acoustic scheme, an optical scheme, or a Carbon Nano Tube (CNT) scheme may be included generally. In addition, a digitizer scheme that uses electromagnetic induction or the like may be included. According to an embodiment of the present disclosure, the touch sensor 140 of the capacitive scheme may detect a location of an input using a change in a capacitance, which is generated as an input instrument or a body part is in contact with a detecting electrode formed of a conductive substance, such as Indium Thin Oxide (ITO) or metal mesh. The touch screen of the capacitive scheme may be classified variously based on a shape of a detecting electrode, an electrode layer structure, and a manufacturing scheme.

A mutual capacitance scheme, for example, is a scheme that uses a capacitance between two electrodes, in which an electrode is disposed in a horizontal axis and the other electrode is disposed in a vertical axis so as to form sensors in a lattice structure, and measures a capacitance generated between the electrodes so as to detect a change in a capacitance in each point. According to a self capacitance scheme, for example, an electrode disposed in a horizontal axis and an electrode disposed in a vertical axis form sensors independently, and a change in a capacitance of each point may be detected by measuring a capacitance generated in each electrode.

The touch sensor 140 may detect a contact or a proximity of an external object with respect to at least a part of the electronic device 101, using, for example, the mutual capacitance scheme or the self capacitance scheme.

The display 150 may display various pieces of information (for example, multimedia data or text data) to a user.

Although not illustrated, the electronic device 101 may further include an input/output interface. The input/output interface may transfer a command or data input from a user through an input/output device (for example, a microphone, a speaker, a key, the touch sensor 140, the display 150, and the like), to the processor 120, the memory 130, the communication interface 160, or the input management module 170, through, for example, the bus 110. For example, the input/output interface may provide, to the processor 120, data corresponding to a contact or approach detected through the touch sensor 140 (for example, the touch screen). In addition, the input/output interface may output, through the input/output device, a command or data received, for example, through the bus 110, from the processor 120, the memory 130, the communication interface 160, or the input management module 170. For example, the input/output interface may output voice data processed through the processor 120 to a user through a speaker.

The communication interface 160 may connect communication between the electronic device 101 and an external electronic device (for example, the electronic device 104 or the server 106). For example, the communication interface 160 may be connected to a network 162 through wireless or wired communication to communicate with the external device. The wireless communication may include at least one of, for example, Wi-Fi, Bluetooth (BT), a Near Field Communication (NFC), GPS and a cellular communication (for example, Long Term Evolution (LTE), LTE-Advanced (LTE-A), Code Division Multiple Access (CDMA), Wideband Code Division Multiple Access (WCDMA), Universal Mobile Telecommunications System (UMTS), Wireless Broadband (WiBro), Global System for Mobile Communication (GSM), or the like). The wired communication may include at least one of, for example, a Universal Serial Bus (USB), a High Definition Multimedia Interface (HDMI), Recommended Standard 232 (RS-232), and a Plain Old Telephone Service (POTS).

According to an embodiment of the present disclosure, the network 162 may be a communication network. The communication network may include at least one of: a computer network, the Internet, the Internet of things, and a telephone network. According to an embodiment of the present disclosure, a protocol (for example, a transport lay protocol, data link layer protocol, or a physical layer protocol) for communication between the electronic device 101 and the external device may be supported in at least one of the applications 134, the application programming interface 133, the middleware 132, the kernel 131, and the communication interface 160.

The input management module 170 may process at least a part of information acquired from other component elements (for example, the processor 120, the memory 130, the touch sensor 140, and the communication interface 160), and may provide the processed information to a user through various methods. The input management module 170 may control at least a part of a function of the electronic device 101 so as to identify or discriminate an external object detected through the touch sensor 140, using the processor 120 or independently from the processor 120. Hereinafter, additional information associated with the input management module 170 will be provided with reference to FIGS. 2 through 7.

FIG. 2 illustrates a method in which an electronic device detects an external object according to an embodiment of the present disclosure.

Referring to FIG. 2, an electronic device 200 may include a display 210 (for example, the display 150) and a touch sensor 220 (for example, the touch sensor 140).

According to an embodiment of the present disclosure, the touch sensor 220 may be a touch screen that is included in the front side of the display 210. Although FIG. 2 illustrates that a touch screen is disposed in the front side of the display 210, the touch screen may be disposed in the back side of the display 210 and any other disposition may be available. For example, the touch sensor 220 may be integrated into the display 210, and the display 210 may execute at least a few functions of the touch sensor 220.

According to various embodiments of the present disclosure, the touch sensor 220 may be embodied based on various technologies. For example, the touch sensor may detect an external object based on a capacitance. Depending on various embodiments, the touch sensor 220 may use both a scheme based on a capacitance and a scheme based on a magnetic induction. When the touch sensor 220 uses both the capacitance scheme and the magnetic induction scheme, for example, the touch sensor 220 may detect an input of a stylus (for example, an electronic pen) based on the magnetic induction scheme, and may detect an input of a body part of a user based on the capacitance scheme. The touch sensor 220 may not be limited to a detecting technology, and it is apparent to those skilled in the art that various embodiments of the present disclosure may be embodied using other touch detecting technologies.

Referring to FIG. 2, the touch sensor 220 may detect at least one external object that touches or approaches a touch surface 222 of the touch sensor 220. For example, the touch sensor 220 may detect a touch or a proximity of a stylus 230 or a hand 240 (for example, a finger, a palm, or the like) of a user with respect to the touch sensor 220. The touch sensor 220 may detect, for example, an external object that does not physically touch but is proximate to the touch sensor 220. The touch sensor 220 may detect a part of a body part of a user located within, for example, a specified proximate range D1.

The electronic device 200 may detect, for example, a touch or a proximity of an external object (for example, the stylus 230 or the hand 240) with respect to the electronic device 200, using different touch schemes. According to an embodiment of the present disclosure, the electronic device 200 may include the touch sensor 220 that supports both a first touch scheme (for example, a scheme of measuring a mutual capacitance) and a second touch scheme (for example, a scheme of measuring a self capacitance). For example, the electronic device 200 may detect a touch of an external object on the electronic device 200 based on a mutual capacitance, and may detect a proximity based on a self capacitance. For example, the electronic device 200 may detect a touch of the stylus 230 as a touch input based on a mutual capacitance, and may detect a proximity of the stylus 230 as a hovering input based on a self capacitance.

According to an embodiment of the present disclosure, when the electronic device 200 detects a touch of an external object based on a mutual capacitance, the electronic device 200 may detect whether a proximity of the external object associated with the touch is additionally detected, based on a self capacitance. According to an embodiment of the present disclosure, when the electronic device 200 detects a proximity of an external object based on a self capacitance, the electronic device 200 may detect whether a touch of the external object associated with the proximity is additionally detected, based on a mutual capacitance. The electronic device 200 may detect a touch or a proximity of an external object (for example, the stylus 230 or the hand 240) with respect to the electronic device 200, through the touch sensor 220 in a time division manner, by, for example, dividing a certain time period, and alternately obtaining, at least once, a first measurement value based on the first touch scheme and a second measurement value based on the second touch scheme. According to an embodiment of the present disclosure, the electronic device 200 may obtain the first measurement value and the second measurement value at the same time or substantially at the same time.

The electronic device 200 may apply different values to a sensitivity for recognizing a touch of an external object (for example, the stylus 230 or the hand 240) and to a sensitivity for recognizing a proximity of an external object. According to an embodiment of the present disclosure, the electronic device 200 may adjust a sensitivity of the touch sensor 220 based on a type of input to be recognized by the touch sensor 220. For example, the proximity range D1 of the electronic device 200 may be changed based on the sensitivity. In a condition in which the sensitivity of the touch sensor 220 is set to be relatively low, the proximity range D 1 may be formed to be relatively close to the touch surface 222 or the proximity range D1 may not be formed. In a condition in which the sensitivity of the touch sensor 220 is set to be relatively high, the proximity range D1 may be formed to be relatively far from the touch surface 222 when compared to the condition in which the sensitivity is set to be low.

According to an embodiment of the present disclosure, when the electronic device 200 detects a touch of an external object based on a first sensitivity (for example, a sensitivity set to detect an object that is physically in contact with the touch surface 222), the electronic device 200 may detect whether a proximity associated with an external object of which the touch is detected, based on a second sensitivity (for example, a sensitivity set to detect an object that does not have a physical contact but is proximate to the proximate range D1). According to an embodiment of the present disclosure, when the electronic device 200 detects a proximity of an external object based on the second sensitivity, the electronic device 200 may detect whether a touch of the external object associated with the proximity is additionally detected, based on the first sensitivity. The electronic device 200 may, for example, divide a certain time period and alternately measure the first sensitivity and the second sensitivity (a sensitivity higher than the first sensitivity) at least once, and may detect a touch or a proximity of an external object (for example, the stylus 230 or the hand 240) with respect to the electronic device 200 through the touch sensor 220 in a time division manner.

According to an embodiment of the present disclosure, the electronic device 200 may adjust a sensitivity of the touch sensor 220 based on a type of application executed in the electronic device 200. For example, in one application, the electronic device 200 may adjust the sensitivity of the touch sensor 220 so that an input of at least one body part of a user (for example, the hand 220) is detected and, in another application, the electronic device 200 may adjust the sensitivity of the touch sensor 220 so that an input of the stylus 230 is detected. For example, a threshold value associated with the sensitivity for detecting an input by the stylus 230 may be set to be lower than a threshold value associated with a sensitivity for detecting an input of at least one body part of the user. Accordingly, a proximity of at least one body part of the user (for example, the hand 220) may be recognized as a user input (for example, a hovering input) in one application, and may not be recognized as a user input in another application.

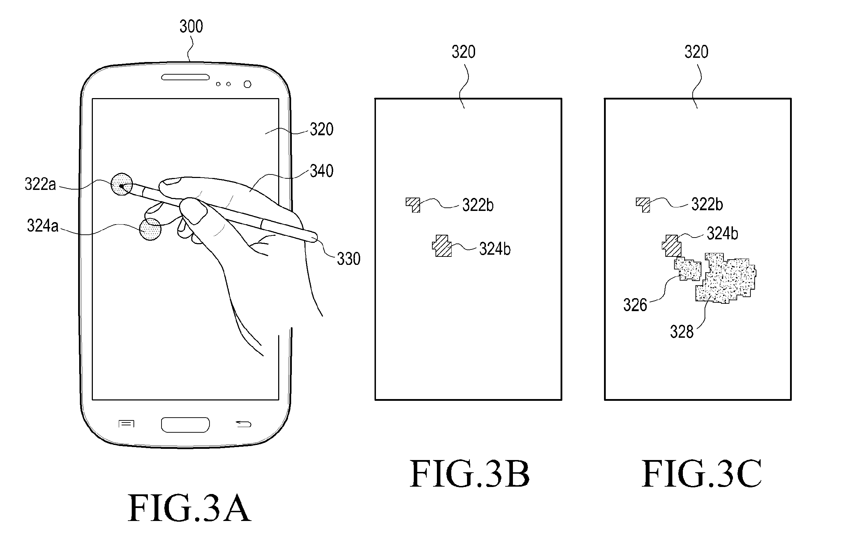

FIGS. 3A, 3B, and 3C illustrate a method in which an electronic device identifies an input using a touch sensor according to an embodiment of the present disclosure. The electronic device 300 may be, for example, the electronic device 200 of FIG. 2.

Referring to FIG. 3A, an electronic device 300 includes a touch sensor 320 (for example, the touch sensor 140). The touch sensor 320 may be, for example, the touch sensor 220 of FIG. 2.

The electronic device 300 may detect one or more touches (for example, a touch input 322a or a touch input 324a) of at least one object located outside the electronic device, for example, through the touch sensor 320. The touch may be generated multiply, for example, by each of a plurality of objects or by each of a plurality of parts of a single object.

According to an embodiment of the present disclosure, a user may execute a control input (for example, a selection input, a handwriting input, and the like) for controlling the electronic device 300, for example, using a stylus 330 (for example, the stylus 230). Referring to FIG. 3A, the electronic device 300 may detect the first touch input 322a that is in contact with a surface of the touch sensor 320 (for example, the touch surface 222). In association with the input, at least a part of the hand 340 of the user (for example, the hand 240 of the user) may be in contact with the touch sensor 320, based on a method of holding the stylus, a size of the hand 340 of the user, a size of the touch sensor 320, a size of the electronic device 300, or the like. Accordingly, the electronic device 300 may detect the second touch input 324a that is in contact with a surface of the touch sensor 320 (for example, the touch surface 222).

The electronic device 300 may respond to both the first touch input 322a and the second touch input 324a (simultaneously, i.e. together in parallel), for example, when the electronic device 300 is capable of processing multiple inputs through the touch sensor 320. The electronic device 300 may process (multitask) at least one command with respect to the electronic device 300, which corresponds to at least an area of the touch sensor 320 where, for example, the first touch input 322a and the second touch input 324 are detected. According to an embodiment of the present disclosure, the first touch input 322a may be an intentional input of a user, and the second touch input 324a may be an unintentional input of the user. Accordingly, the electronic device 300 may control operations of the electronic device 300 even in response to the unintentional input of the user, in addition to the intentional input of the user.

The electronic device 300 may generate corresponding detecting data (for example, detecting data 322b or detecting data 324b) when one or more touches are detected, for example, through the touch sensor 320. According to an embodiment of the present disclosure, the electronic device 300 may determine whether a proximity of at least one object is detected when at least one touch is detected through the touch sensor 320. An object that is close to the touch sensor 320 but is not physically in contact with the touch sensor 320 may be referred to as, for example, an object that is proximate to or hovering over the touch sensor 320. The proximity may be detected when at least a part of at least one object is hovering, for example, within the proximate range D1 of FIG. 2.

The electronic device 300 may generate corresponding detecting data (for example, detecting data 326 or detecting data 328) when one or more proximities are detected, for example, through the touch sensor 320. By generating the detecting data associated with a touch or a proximity, the electronic device 300 may identify an input (for example, a touch input or a proximity input) of an external object with respect to the electronic device 300.

According to an embodiment of the present disclosure, when a proximity input (for example, a hovering input) of at least one object, which is detected in association with a touch input (for example, a touch input) of at least one object, is located, the electronic device 300 may determine whether to recognize the touch input as a control input (for example, a selection input) for controlling the electronic device 300, based on the proximity input. The electronic device 300 may recognize a touch input generated by an object associated with a proximity input as a control input for controlling the electronic device 300, for example, when data obtained through the touch sensor 320 in association with the proximity input satisfies a first condition. The electronic device 300 may not recognize a touch input generated by an object associated with a proximity input as a control input for controlling the electronic device 300, for example, when data obtained through the touch sensor 320 in association with the proximity input satisfies a second condition. The first condition or the second condition, for example, may include a sharpness corresponding to a size of an area where a touch is recognized in the touch sensor 320 and a distance between the area where the touch is recognized and a corresponding object, among data obtained through the touch sensor 320 in association with at least one object. Additionally or alternatively, the first condition and the second condition may be a shape of an external object, a size, a movement speed, a distance to another object, which are obtained through the touch sensor 320, or a combination of at least two of them.

According to an embodiment of the present disclosure, the electronic device 300 measures a capacitance using the touch sensor 320, so as to detect an input of at least one external object. In the touch sensor 320, for example, a plurality of electrodes that may measure a capacitance, may be disposed in one or more horizontal axes and vertical axes. For example, when an external object touches or is proximate to the touch sensor 320, a change in capacitance may occur in each electrode disposed in the plurality of horizontal axes and vertical axes. The electronic device 300 may detect a value corresponding to a capacitance, for example, from the touch sensor 320, and may generate detecting data corresponding to a location of at least one axis among the plurality of horizontal axes or vertical axes. The detecting data may be a sharpness associated with, for example, a location of an electrode, the number of electrodes, and a capacitance. The sharpness may be data indicating the size of an area of the touch sensor where a change in a capacitance is detected and/or the size of a variation of a capacitance. For example, when an input instrument is detected in a relatively narrow area of the touch sensor 320, a change in a capacitance may be generated in a narrow range on one or more horizontal axes or vertical axes, when compared to the case in which an input instrument is detected in a relatively wider area. As another example, when an input instrument is detected in a closer distance, the change in capacitance may be higher than the case in which an input instrument is detected in a relatively farther distance. Accordingly, for example, an instrument having a narrow area, which is relatively closer to the touch sensor 320, may have a higher sharpness than the opposite case. According to an embodiment of the present disclosure, the electronic device 300 may measure a change in capacitance generated in a plurality of electrodes included in the touch sensor 320, based on a mutual capacitance scheme or a self capacitance scheme. For example, the electronic device 300 may detect the first touch input 322a and the second touch input 324a of at least one external object, based on a mutual capacitance.

Referring to FIG. 3B, the detecting data 322b may be data corresponding to a mutual capacitance measured in association with the first touch input 322a. The detecting data 324b, for example, may be data corresponding to a mutual capacitance measured in association with the second touch input 324a.

Referring to FIG. 3C, the detecting data 326, for example, may be data corresponding to a self capacitance, which is measured in association with at least a part (for example, a middle finger, a ring finger, and the like) of the hand 340 of the user that is proximate to the touch sensor 320. The detecting data 328 may be, for example, data corresponding to a self capacitance, which is measured in association with at least another part (for example, a palm) of the hand 340 of the user that is proximate to the touch sensor 320. A part that is located near the touch sensor 320 among parts of the stylus 330 may be formed of a substance that does not cause a change in a mutual capacitance or a self capacitance. Accordingly, in the present embodiment of the present disclosure, detecting data in association with a part located near the touch sensor 320 among the parts of the stylus 330 may not be generated.

According to an embodiment of the present disclosure, the electronic device 300 may determine at least one of the touch input 322a and the touch input 324a as a control input for controlling the electronic device 300, using the detecting data 322b, 324b, 326, and 328 or a combination thereof. Based on a result of comparison between properties of at least the detecting data 322b and 324b (for example, a size) and a certain value, the electronic device 300 may recognize the first touch input 322 as a control input, and may not recognize the second touch input 324a as a control input (or may recognize the same as an input different from a control input).

According to an embodiment of the present disclosure, the electronic device 300 may determine at least one of detecting data 326 and detecting data 328 as data associated with the detecting data 324b. For example, when a distance between the detecting data 324b and the detecting data 326 is less than or equal to a certain distance, the electronic device 300 may determine that the detecting data 324b and the detecting data 326 are associated with a single object (for example, a hand of a user). For example, when the distance between the detecting data 324b and the detecting data 326 is less than or equal to a certain distance and a distance between the detecting data 326 and the detecting data 328 is less than or equal to a certain distance, the electronic device 300 may determine that the detecting data 324b, 326, and 328 are associated with a single object (for example, a hand of a user). Based on at least the determination, the electronic device 300 may not recognize the second touch input 324a corresponding to the detecting data 324b as a control input.

The electronic device 300 determines, for example, a touch or proximity input of a single object and a touch or proximity input of another object, identifies a type of object associated with each determined input, and determines whether to respond to an input based on a type of object. For example, when an input of the hand 340 of the user is detected together with the input of the stylus 330, the electronic device 300 may recognize an input by the input of the stylus 330, but may reject the input by the hand 340 of the user.

According to an embodiment of the present disclosure, the electronic device 300, for example, may change a certain condition based on a type of application or settings of the electronic device 300, so as to determine whether to recognize a touch or a proximity as a control input. Additionally or alternatively, the electronic device 300 may determine whether a touch or a proximity associated with detecting data is an input for controlling the electronic device 300, based on a shape of detecting data, a size, a movement speed, a type of object, or a combination thereof.

The electronic device 300 may determine, for example, a touch input (for example, the first touch input 322a) as a control input for the electronic device 300, and accordingly, may execute at least one function corresponding to the control input in response to the control input. The electronic device 300 may determine to not recognize, for example, a touch input (for example, the second touch input 324a) as a control input, and accordingly, may not execute a function corresponding to a control input. According to an embodiment of the present disclosure, the electronic device 300 may determine to not recognize a touch input (for example, the second touch input 324a) as a control input, and accordingly, may not execute at least a part of the function corresponding to a control input.

According to an embodiment of the present disclosure, the electronic device 300 may identify a shape of a hand that touches or hovers over the touch sensor 320, and may control (or execute) various functions that may be provided in the electronic device 300 based on the shape of the hand. According to an embodiment of the present disclosure, when the electronic device 300, for example, is put into a pocket, a bag, or the like, and it is determined that the electronic device 300 is in the state of not receiving an additional input of a user, at least one function of the electronic device 300 may be controlled (for example, deactivate the display 150) based on the corresponding state.

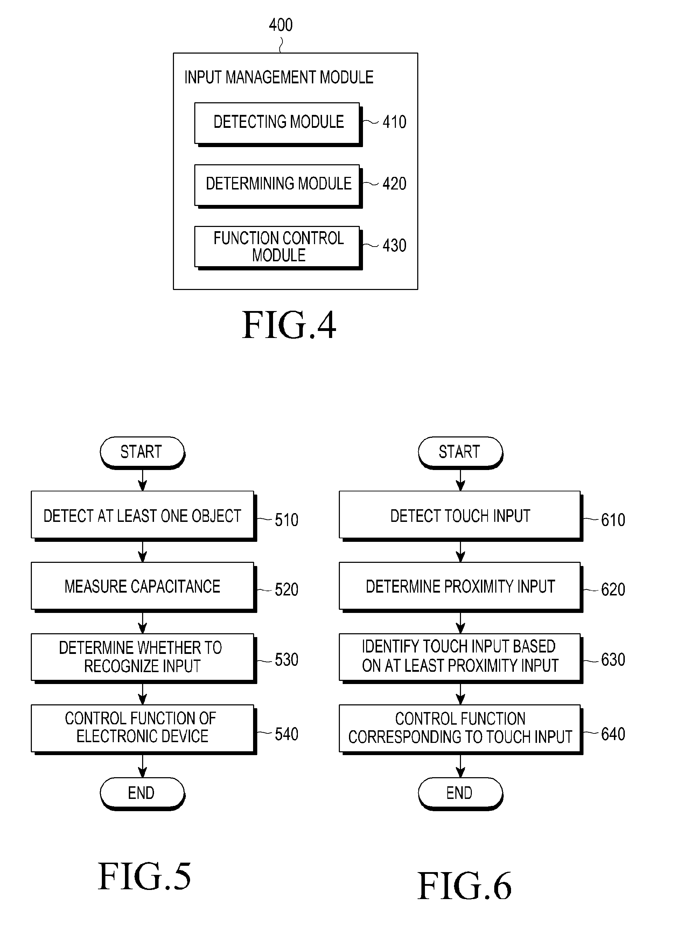

FIG. 4 illustrates an input management module of an electronic device according to an embodiment of the present disclosure. The input management module may be, for example, the input management module 170 of FIG. 1.

Referring to FIG. 4, an input management module 400 may include a detecting module 410, a determining module 420, and a function control module 430.

The detecting module 410 may detect at least one object located outside the electronic device, for example, through one or more touch sensors (for example, the touch sensor 140) functionally connected with the electronic device (for example, the electronic device 101).

According to an embodiment of the present disclosure, the detecting module 410 may detect a touch or a proximity of the at least one object using two or more different touch detecting methods. The touch detecting methods may be associated with, for example, a type of value measured through a touch sensor (for example, the touch sensor 140), a sensitivity of a touch sensor (for example, the touch sensor 140), or a type of a touch sensor (for example, the touch sensor 140). The touch detecting methods, for example, may be used for distinguishing a touch and a proximity of an identical object from one another. The detecting module 410 may measure a mutual capacitance and a self capacitance, for example, through a touch sensor (for example, the touch sensor 140). For example, a mutual capacitance and a self capacitance may be measured based on a time division scheme. According to an embodiment of the present disclosure, the detecting module 410 may detect a touch on an electronic device (for example, the electronic device 101) based on a mutual capacitance, and may detect a proximity with respect to the electronic device (for example, the electronic device 101) based on a self capacitance.

According to an embodiment of the present disclosure, the detecting module 410 may detect a touch or a proximity of the at least one object using two or more different sensitivities. The detecting module 410, for example, may adjust a sensitivity of a touch sensor (for example, the touch sensor 140). For example, when a touch or a proximity of at least one object is detected using a first sensitivity, the detecting module 410 may change the sensitivity of a touch sensor (for example, the touch sensor 140) from the first sensitivity to a second sensitivity. Additionally or alternatively, the sensitivity of the touch sensor (for example, the touch sensor 140) may be alternately changed at least once during a certain time period. According to an embodiment of the present disclosure, the detecting module 410 detects a touch on an electronic device (for example, the electronic device 101) based on the first sensitivity using a single touch sensor (for example, the touch sensor 140), and may detect a proximity with respect to the electronic device (for example, the electronic device 101) based on the second sensitivity.

According to an embodiment of the present disclosure, the detecting module 410 may initiate detecting of a proximity when a plurality of touches is detected through a touch sensor (for example, the touch sensor 140). For example, when a plurality of touches is detected through a touch sensor (for example, the touch sensor 140) while the detecting module 410 operates, being set to detect a touch, the detecting module 410 may operate by changing the setting to detect at least a proximity.

The detecting module 420 may determine whether to recognize a touch or a proximity of at least one object detected, for example, through a touch sensor (for example, the touch sensor 140), as an input for controlling a function of an electronic device (for example, the electronic device 101).

According to an embodiment of the present disclosure, the detecting module 420 may determine an area of a touch sensor (for example, the touch sensor 140) where at least one object is detected. For example, the determining module 420 may select electrodes of a touch sensor (for example, the touch sensor 140) where a change greater than or equal to a threshold value is detected through the detecting module 410, and may determine a recognition area of the touch sensor where a touch or a proximity is recognized, based on the selected electrodes. For example, the determining module 420 may generate detecting data associated with a location of at least one axis among one or more horizontal axes and vertical axes of a touch sensor (for example, the touch sensor 140), based on the selected electrodes. According to an embodiment of the present disclosure, detecting data may be data indicating a variation of a capacitance in an area of a touch sensor (for example, the touch sensor 140) where a change in a capacitance caused by at least one external object is detected. For example, detecting data may be data associated with a mutual capacitance, which is measured in association with a touch of an external object. For example, detecting data may be data associated with a self capacitance, which is measured in association with a proximity of an external object.

According to an embodiment of the present disclosure, when detecting data associated with an object satisfies a certain condition, the determining module 420 may determine to recognize a touch or a proximity of the corresponding object as an input for controlling a function of an electronic device (for example, the electronic device 101). When a sharpness of data corresponding to an area where the touch or the proximity is recognized among the data associated with the mutual capacitance or self capacitance is greater than or equal to a reference value among the detecting data associated with an object, the determining module 420, for example, may recognize a touch or a proximity of the corresponding object as an input for controlling a function of an electronic device (for example, the electronic device 101). When a sharpness of data corresponding to an area where the touch or the proximity is recognized among the data associated with the mutual capacitance or self capacitance is less than a reference value among the detecting data associated with an object, the determining module 420, for example, may not recognize a touch or a proximity of the corresponding object as an input for controlling a function of an electronic device (for example, the electronic device 101). The certain condition may be designated as, for example, coordinates associated with a recognition area, a size of a recognition area, a shape of a recognition area, or a combination thereof.

According to an embodiment of the present disclosure, the determining module 420 may determine, based on detecting data, a type of at least one object detected in a touch sensor (for example, the touch sensor 140). When a plurality of pieces of detecting data is generated, the determining module 420, for example, combines the shape of the detecting data, size, and the distance of the detecting data, or combines at least two or more of them, so as to recognize two or more pieces of detecting data as detecting data associated with a single object. For example, the determining module 420 may determine a type of object associated with an input using two or more pieces of detecting data. The determining module 420, for example, may determine at least one of a plurality of objects associated with an input as a stylus, and may determine at least another object as a hand (for example, a palm). According to an embodiment of the present disclosure, the determining module 420 may determine an object associated with an input as the left cheek or the right cheek of a user. According to an embodiment of the present disclosure, the determining module 420 may determine an object associated with an input as the left hand or the right hand of a user.

According to an embodiment of the present disclosure, when a proximity is detected through a touch sensor (for example, the touch sensor 140), the determining module 420 may predict (estimate) an area where a touch is to be detected, based on an area where the proximity is detected. For example, when an object of which a proximity is detected is determined to be a hand (for example, a hand that holds a stylus), the determining module 420 may predict that a touch of a stylus may be detected in an area located in a specified direction (for example, in a diagonal line) and distance (for example, a distance between a palm of a hand that holds a pen and the pen) from an area where the proximity is detected in a touch sensor (for example, the touch sensor 140). For example, the determining module 420 uses an area that is predicted to have a touch of a stylus among areas of a touch sensor (for example, the touch sensor 140), as an area for detecting an input, and may not use the remaining areas of the touch sensor (for example, the touch sensor 140) as an area for detecting an input. For example, when a touch of a stylus is detected in the area that is predicted to have a touch of a stylus, the determining module 420 may remove other touches detected in a certain range from the area where a proximity is detected, from inputs for controlling an electronic device (for example, the electronic device 101). According to an embodiment of the present disclosure, when a proximity is detected based on a self capacitance, the determining module 420 may determine, as a hand, a touch that is detected based on a mutual capacitance in an area within a certain distance from an area where the proximity is detected, and may remove the same from the inputs for controlling an electronic device (for example, the electronic device 101).

Based on the fact that the determining module 420 determines to recognize a touch or a proximity detected through a touch sensor (for example, the touch sensor 140) as an input for controlling an electronic device (for example, the electronic device 101), the function control module 430, for example, may control the electronic device (for example, the electronic device 101).

According to an embodiment of the present disclosure, when the determining module 420 determines to recognize a touch or a proximity of a first object among a plurality of objects as an input, the function control module 430, for example, may execute a function corresponding to the input of the first object. Further, for example, when the determining module 420 determines to not recognize a touch or a proximity of a second object among a plurality of objects as an input, the function control module 430, for example, may not execute at least a part of a function corresponding to the input of the second object.

According to various embodiments of the present disclosure, an electronic device may include a touch sensor that measures both a self capacitance and a mutual capacitance corresponding to at least one external object, a detecting module set to detect the at least one object, using the touch sensor, a determining module set to determine whether to recognize a touch or a proximity of the at least one object as an input for controlling a function of the electronic device, based on the self capacitance, and a function control module set to control the function, based on the determination.

According to various embodiments of the present disclosure, the detecting module may detect the at least one object, based on a mutual capacitance measured through the touch sensor.

According to various embodiment of the present disclosure, the detecting module may use the touch sensor to alternately measure the self capacitance and the mutual capacitance at least once during a specified period.

According to various embodiment of the present disclosure, the touch sensor may include a plurality of electrodes for measuring the self capacitance, and the determining module may select an electrode corresponding to the self capacitance, which satisfies a designated condition, from among the plurality of electrodes, and may determine an area where the touch or the proximity is recognized, based on the selected electrode.

According to various embodiments of the present disclosure, the determining module may determine a type of at least one object using a distribution of data associated with the self capacitance.

According to various embodiment of the present disclosure, the determining module may determine the type based on a sharpness of data corresponding to an area where the touch or the proximity is recognized among the data associated with the self capacitance.

According to various embodiments of the present disclosure, the determining module may determine the type further using at least one of a shape of the at least one object, a size, a movement speed, and a distance between the at least one object and another object.

According to various embodiments of the present disclosure, the type of the at least one object may include at least one of a stylus, a palm, a fingertip, a cheek, gloves, a pocket, a bag, and clothes.

According to various embodiments of the present disclosure, the at least one object includes at least a first object and a second object, and the determining module may be set to perform determining to recognize a touch or a proximity of the first object with respect to the electronic device as the input when data corresponding to the first object among data associated with the self capacitance satisfies a first condition, and determining not to recognize a touch or a proximity of the second object with respect to the electronic device to be the input when data corresponding to the second object among data associated with the self capacitance satisfies a second condition.

According to various embodiments of the present disclosure, the determining module may set to recognize the touch or the proximity as the input when the data associated with the self capacitance satisfies the first condition, and to not recognize the touch or the proximity as the input when the data associated with the self capacitance satisfies the second condition.

According to various embodiments of the present disclosure, the determining module may be set to obtain a first area where data associated with the mutual capacitance measured through the touch sensor satisfies a first condition, to obtain a second area where data associated with the self capacitance satisfies a second condition, and to not recognize a touch or a proximity with respect to at least a part of the first area as the input, based on a distance between the first area and the second area.

According to various embodiments of the present disclosure, the at least one object includes at least a first object and a second object, and the function control module is set to execute the entire function corresponding to the input based on a determination to recognize a touch or a proximity of the first object as the input, and to not execute at least a part of the function corresponding to the input based on a determination to not recognize a touch or a proximity of the second object as the input.

According to various embodiments of the present disclosure, the electronic device further includes a movement sensor functionally connected with the electronic device, and the function control module may control the function based on a movement of the electronic device detected through the movement sensor, and the input.

FIG. 5 is a flowchart illustrating a method of controlling a function in an electronic device in response to an input according to an embodiment of the present disclosure.

Referring to FIG. 5, in operation 510, an electronic device (for example, the detecting module 410 of the electronic device 101) may detect at least one object located outside the electronic device using, for example, a touch sensor (for example, the touch sensor 140) that is functionally connected with the electronic device. According to an embodiment of the present disclosure, at least one object may be detected based on a capacity (for example, a mutual capacitance) measured through a touch sensor. According to an embodiment of the present disclosure, at least one external object may be detected using various detecting devices (for example, a camera, a proximity sensor, a digitizer, a biometric sensor, or the like) that may be used in the electronic device. According to an embodiment of the present disclosure, when a movement of the electronic device is detected through a motion sensor that is functionally connected with the electronic device, the electronic device may detect at least one object located outside the electronic device using a touch sensor. According to an embodiment of the present disclosure, at least one object may include at least one of: a stylus, a finger, a palm, a left cheek, a right cheek, a left hand, a right hand, a bag, a pocket, a table, gloves, clothes, shoes, and a vehicle.

In operation 520, the electronic device (for example, the detecting module 410 of the electronic device 101) may measure a capacitance corresponding to at least one object. According to an embodiment of the present disclosure, the electronic device may measure data associated with a proximity (or a hovering) of at least one object within a certain distance from the electronic device, using various detecting devices (for example, a camera, a proximity sensor, a biometric sensor, a touch sensor, or the like) that may be used in the electronic device.

In operation 530, the electronic device (for example, the determining module 420 of the electronic device 101) may determine whether to recognize a touch or a proximity of at least one object with respect to the electronic device as an input for controlling the electronic device, based on a capacitance (for example, a self capacitance). According to an embodiment of the present disclosure, when a plurality of objects is detected, the electronic device recognizes a touch or a proximity of a few of the plurality of objects as an input for controlling the electronic device, and may not recognize a touch or a proximity of another few objects of the plurality of objects as an input for controlling the electronic device. For example, the electronic device may identify a type of at least one detected object, based on at least a mutual capacitance and a self capacitance.

In operation 540, the electronic device (for example, the function control module 430 of the electronic device 101) determines to recognize a touch or a proximity of at least one object as an input, and may execute a function corresponding to an input based on the determination. According to an embodiment of the present disclosure, the electronic device determines to not recognize a touch or a proximity of at least one object as an input, and may not execute at least a part of a function corresponding to an input. For example, when a plurality of objects is detected, the electronic device may enable a touch or a proximity of at least a few of the plurality of objects to not be misrecognized as an input. For example, when multiple inputs by a stylus and a hand of a user are generated, the electronic device may respond to an input of the stylus, but may not respond to an input of the hand. According to an embodiment of the present disclosure, the electronic device may execute a function corresponding to a type of object, based on a type of object detected through a touch sensor.

According to an embodiment of the present disclosure, when a movement detected through a motion sensor satisfies a certain condition, and an object that is determined to be a cheek of a user is detected within a certain time period from a point in time when the movement is detected, the electronic device may deactivate a display (for example, turn a screen off). According to an embodiment of the present disclosure, when a movement detected through a motion sensor satisfies a certain condition, for example, when an object that is determined to be the left (or right) cheek of a user is detected within a certain period of time from a point in time when the movement is detected, the electronic device may adjust an audio output characteristic (for example, a volume, a sound quality, a sound effect, or the like) of the electronic device to be appropriate for the left (or right) ear of the user.

FIG. 6 is a flowchart illustrating a method of controlling a function in an electronic device in response to an input according to an embodiment of the present disclosure.

Referring to FIG. 6, in operation 610, the electronic device (for example, the detecting module 410 of the electronic device 101) detects a touch input of at least one object located outside the electronic device, with respect to the electronic device. For example, an electronic device may detect a plurality of touch inputs using various detecting devices (for example, a touch sensor, a camera, a proximity sensor, a digitizer, a biometric sensor, or the like) that may be used in the electronic device. According to an embodiment of the present disclosure, detecting of a touch input may be executed based on a mutual capacitance measured through a touch sensor. In operation 620, the electronic device (for example, the detecting module 410 of the electronic device 101) identifies a proximity input of at least one object located outside the electronic device. For example, when a plurality of touch inputs is detected in operation 610, the electronic device may proceed with operation 620 to determine whether a proximity input with respect to the electronic device is detected. For example, the electronic device may detect one or more proximity inputs using various detecting devices (for example, a touch sensor, a camera, a proximity sensor, a digitizer, a biometric sensor, or the like) that may be used in the electronic device. According to an embodiment of the present disclosure, detecting of a proximity input may be executed based on a self capacitance measured through a touch sensor.

In operation 630, the electronic device (for example, the determining module 420 of the electronic device 101) may identify a touch input detected in the electronic device, based on at least a proximity input. For example, the electronic device determines a type of object associated with a touch input based on at least a proximity input, and determines whether to recognize the touch input based on the type of object. According to an embodiment of the present disclosure, when both a touch input and a proximity input correspond to a certain condition, the electronic device may not recognize the touch input as an input for controlling the electronic device. In operation 640, the electronic device (for example, the function control module 430 of the electronic device 101) may control a function corresponding to the touch input. For example, the electronic device determines to not recognize a touch input of at least one object as an input for controlling the electronic device, and may not execute at least a part of a function corresponding to the touch input. For example, when the electronic device determines that one of a plurality of touch inputs is generated by a stylus, and another touch input is generated by a hand, the electronic device may ignore the touch input of the hand.

The operations described in the processes or methods illustrated in FIGS. 5 to 6 may be executed sequentially, in parallel, repeatedly, or in a heuristic manner. Furthermore, the operations may be executed in a different order, some of the operations may be omitted, or other operations may be added.

According to various embodiments of the present disclosure, a method of obtaining an input in an electronic device may include detecting at least one object located outside the electronic device, using a touch sensor functionally connected with the electronic device, measuring a self capacitance corresponding to the at least one object, through the touch sensor, determining whether to recognize a touch or a proximity of the at least one object with respect to the electronic device as an input for controlling a function of the electronic device, based on at least the self capacitance, and controlling the function based on the determination.

According to various embodiments of the present disclosure, the detecting of the at least one object located outside the electronic device may include detecting the at least one object based on a mutual capacitance corresponding to the at least one object.

According to various embodiments of the present disclosure, the determining of whether to recognize a touch or a proximity with respect to the electronic device as an input for controlling a function of the electronic device may include determining a type of the at least one object based on a distribution of data associated with the self capacitance.

According to various embodiment of the present disclosure, the determining of the type of the at least one object may use a sharpness of data corresponding to an area where the touch or the proximity is recognized from among data associated with the self capacitance.

According to various embodiments of the present disclosure, the at least one object includes at least a first object and a second object, and the determining of whether to recognize a touch or a proximity with respect to the electronic device as an input for controlling a function of the electronic device may include determining to recognize a touch or a proximity of the first object with respect to the electronic device as the input when data corresponding to the first object from among the data associated with the self capacitance satisfies a first condition, and determining to not recognize a touch or a proximity of the second object with respect to the electronic device as the input when data corresponding to the second object from among the data associated with the self capacitance satisfies a second condition.

According to various embodiments of the present disclosure, the determining of whether to recognize a touch or a proximity with respect to the electronic device as an input for controlling a function of the electronic device may include recognizing the touch or the proximity as the input when the data associated with the self capacitance satisfies a first condition, and not recognizing the touch or the proximity as the input when the data associated with the self capacitance does not satisfy a second condition.

According to various embodiments of the present disclosure, the determining of whether to recognize a touch or a proximity with respect to the electronic device as an input for controlling a function of the electronic device may include obtaining a first area where data associated with the mutual capacitance measured through the touch sensor satisfies a first condition, obtaining a second area where data associated with the self capacitance satisfies a second condition, and determining to not recognize a touch or a proximity with respect to at least a portion of the first area as the input, based on a distance between the first area and the second area.

According to various embodiments of the present disclosure, the at least one object includes at least a first object and a second object, and controlling of the function may include executing the entire function corresponding to the input, based on a determination to recognize a touch or a proximity of the first object as the input, and not executing at least a part of the function corresponding to the input, based on a determination to not recognize a touch or a proximity of the second object as the input.

According to various embodiments of the present disclosure, the controlling of the function may include selecting a content corresponding to the input from among at least one content displayed through a display that is functionally connected with the electronic device.

According to various embodiments of the present disclosure, a method of obtaining an input in an electronic device may include detecting a plurality of touch inputs of at least one object located outside the electronic device, through a touch sensor functionally connected with the electronic device, detecting a proximity input of the at least one object, and determining at least one of the plurality of touch inputs as an input for controlling the electronic device, based on the proximity input.

According to various embodiments of the present disclosure, the detecting of the plurality of touch inputs of at least one object located outside the electronic device may include detecting the plurality of touch inputs based on at least one of a mutual capacitance, a self capacitance, an induced current, and a voltage corresponding to the at least one object.

According to various embodiments of the present disclosure, the detecting of the proximity input of the at least one object may include detecting a proximity input of the at least one object based on a self capacitance measured through a touch sensor functionally connected with the electronic device.

According to various embodiments of the present disclosure, the detecting of the plurality of touch inputs of the at least one object located outside the electronic device may include detecting touch inputs of an object associated with the mutual capacitance among the at least one object when the mutual capacitance measured through the touch sensor satisfies a first threshold value, and detecting of the proximity input of the at least one object may include detecting a proximity input of an object associated with the mutual capacitance among the at least one object when the mutual capacitance measured through the touch sensor satisfies a second threshold value.

According to various embodiments of the present disclosure, the at least one object includes at least a first object and a second object, and detecting of the plurality of touch inputs of the at least one object located outside the electronic device may include detecting a first touch input of the first object and a second touch input of the second object, and determining of at least one of the plurality of touch inputs as an input for controlling the electronic device may include not determining at least one of the first touch input and the second touch input as an input for controlling the electronic device (i.e. determining that at least one of the first touch input and the second touch input is not to be recognized as input for controlling the electronic device), based on a determination that data associated with the proximity input satisfies a certain condition.

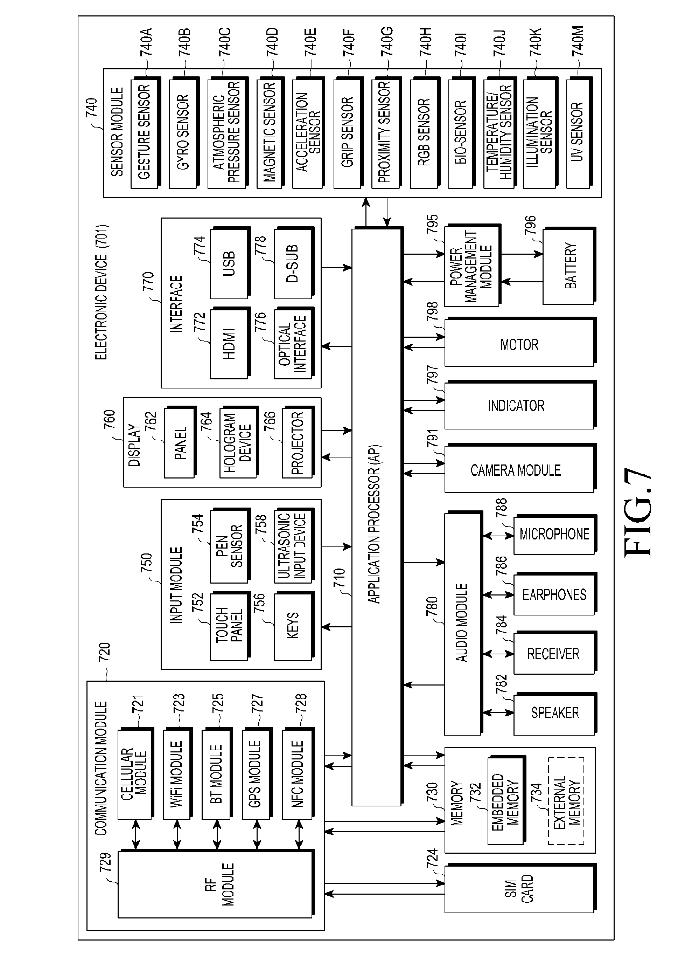

FIG. 7 is a block diagram of an electronic device according to an embodiment of the present disclosure. The electronic device may constitute, for example, all or a part of the electronic device 101 shown in FIG. 1.

Referring to FIG. 7, an electronic device 701 may include at least one Application Processor (AP) 710, a communication module 720, a Subscriber Identification Module (SIM) card 724, a memory 730, a sensor module 740, an input module 750, a display 760, an interface 770, an audio module 780, a camera module 791, a power management module 795, a battery 796, an indicator 797, and a motor 798.

The AP 710 may control a plurality of hardware or software component elements connected with the AP 710 by driving an operating system or an application program, may process various data including multimedia data, and may perform calculations. The AP 710 may be implemented as, for example, a System on Chip (SoC). According to an embodiment of the present disclosure, the AP 710 may further include a Graphic Processing Unit (GPU).

The communication module 720 (for example, the communication interface 160) may perform data transmission/reception in communication between the electronic device 701 (for example, the electronic device 101) and other electronic devices (for example, the electronic device 104 and the server 106) connected over a network. According to an embodiment of the present disclosure, the communication module 720 may include a cellular module 721, a Wi-Fi module 723, a BT module 725, a GPS module 727, an NFC module 728, and a Radio Frequency (RF) module 729.

The cellular module 721 may provide a voice call, a video call, a message service, or an internet service through a communication network (for example, LTE, LTE-A, CDMA, WCDMA, UMTS, WiBro, GSM, or the like). In addition, the cellular module 721 may identify and authenticate an electronic device in a communication network using, for example, a subscriber identification module (for example, the SIM card 724). According to an embodiment of the present disclosure, the cellular module 721 may perform at least a few of functions which the AP 710 may provide. For example, the cellular module 721 may perform at least a part of a multimedia control function.

According to an embodiment of the present disclosure, the cellular module 721 may include a Communication Processor (CP). Further, the cellular module 721 may be implemented as, for example, an SoC. Although the component elements, such as the cellular module 721 (for example, a communication processor), the memory 730, and the power management module 795 are illustrated to be separate from the AP 710, the AP 710 may be implemented to include at least a few of the above described component elements (for example, the cellular module 710), or a CP may be implemented as a separate module.

According to an embodiment of the present disclosure, the AP 710 or the cellular module 721 (for example, a communication processor) may load, to a volatile memory, commands or data received from at least one of a non-volatile memory and other component elements connected thereto, and may process the loaded commands or data. Further, the AP 710 or the cellular module 721 may store, in a non-volatile memory, data received from or generated by at least one of other component elements.

The Wi-Fi module 723, the BT module 725, the GPS module 727, and the NFC module 728 each may include, for example, a processor for processing data transmitted/received through a corresponding module. Although the cellular module 721, the Wi-Fi module 723, the BT module 725, the GPS module 727, and the NFC module 728 are illustrated as individual blocks, at least a few (for example, two or more) of the cellular module 721, the Wi-Fi module 723, the BT module 725, the GPS module 727, and the NFC module 728 may be included in an Integrated Chip (IC) or an IC package. For example, at least a few (for example, a communication processor corresponding to the cellular module 721 and a Wi-Fi processor corresponding to the Wi-Fi module 723) of processors corresponding to the cellular module 721, the Wi-Fi module 723, the BT module 725, the GPS module 727, and the NFC module 728, respectively, may be implemented as a single SoC.

The RF module 729 may transmit/receive data, for example, an RF signal. Although not illustrated, the RF unit 729 may include, for example, a transceiver, a Power Amp Module (PAM), a frequency filter, a Low Noise Amplifier (LNA), or the like. Further, the RF unit 729 may further include a component (for example, an antenna) for transmitting/receiving an electromagnetic wave in the air in radio communication, such as a conductor, a conducting wire, or the like. Although the cellular module 721, the Wi-Fi module 723, the BT module 725, the GPS module 727, and the NFC module 728 are illustrated to share a single RF module 729, at least one of the cellular module 721, the Wi-Fi module 723, the BT module 725, the GPS module 727, and the NFC module 728 may transmit/receive the RF signal through a separate RF module.

The SIM card 724 may be a card including a subscriber identification module, and may be inserted into a slot formed in a particular portion of the electronic device. The SIM card 724 may include unique identification information (for example, Integrated Circuit Card IDentifier (ICCID)) or subscriber information (for example, International Mobile Subscriber Identity (IMSI)).

The memory 730 (for example, the memory 130) may include an embedded memory 732 or an external memory 734. The embedded memory 732 may include, for example, at least one of a volatile memory (for example, a Dynamic Random Access Memory (DRAM), a Static RAM (SRAM), a Synchronous Dynamic RAM (SDRAM), or the like) and a non-volatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a NAND flash memory, a NOR flash memory, or the like).

According to an embodiment of the present disclosure, the embedded memory 732 may be a Solid State Drive (SSD). The external memory 734 may further include a flash drive, for example, a Compact Flash (CF), a Secure Digital (SD), a Micro Secure Digital (Micro-SD), a Mini Secure Digital (Mini-SD), an extreme Digital (xD), a memory stick or the like. The external memory 734 may be functionally connected with the electronic device 701 through various interfaces. According to an embodiment of the present disclosure, the electronic device 701 may further include a storage device (or storage medium), such as a hard drive.

The sensor module 740 may measure a physical quantity or detect an operation state of the electronic device 701, and may convert the measured or detected information to an electronic signal. The sensor module 740 may include at least one of, for example, a gesture sensor 740A, a gyro sensor 740B, an atmospheric pressure sensor 740C, a magnetic sensor 740D, an acceleration sensor 740E, a grip sensor 740F, a proximity sensor 740G, a color sensor 740H (for example, a Red/Green/Blue (RGB) sensor), a bio-sensor 740I, a temperature/humidity sensor 740J, an illumination sensor 740K, and an Ultra Violet (UV) sensor 740M. Additionally or alternatively, the sensor module 740 may include, for example, an E-nose sensor (not illustrated), an ElectroMyoGraphy (EMG) sensor (not illustrated), an ElectroEncephaloGram (EEG) sensor (not illustrated), an ElectroCardioGram (ECG) sensor (not illustrated), an InfraRed

(IR) sensor, an iris sensor (not illustrated), a fingerprint sensor, and the like. The sensor module 740 may further include a control circuit for controlling at least one sensor included therein.

The input device 750 may include a touch panel 752, a (digital) pen sensor 754, a key 756, or an ultrasonic input device 758. The touch panel 752 may recognize a touch input through at least one of, for example, a capacitive type, a resistive type, an infrared type, and an ultrasonic wave type. The touch panel 752 may further include a control circuit. The capacitive type may recognize a physical contact or proximity. The touch panel 752 may also further include a tactile layer. In this case, the touch panel 752 may provide a tactile reaction to a user.

The (digital) pen sensor 754 may be implemented, for example, using a method identical or similar to a method of receiving a touch input of a user, or using a separate recognition sheet. The key 756 may include, for example, a physical button, an optical key or a keypad. The ultrasonic input unit 758 may use an input tool that generates an ultrasonic signal and enable the electronic device 701 to determine data by detecting the ultrasonic signal to the microphone 788, thereby enabling wireless recognition. According to an embodiment of the present disclosure, the electronic device 701 may also receive a user input from an external device (for example, a computer or server) connected thereto, using the communication module 720.

The display 760 (for example, the display 150) may include a panel 762, a hologram device 764, or a projector 766. For example, the panel 762 may be a Liquid Crystal Display (LCD) or an Active Matrix Organic Light Emitting Diode (AM-OLED). The panel 762 may be implemented to be, for example, flexible, transparent, or wearable. The panel 762 may also be configured as one module integrated into the touch panel 752. The hologram 764 may show a stereoscopic image in the air using interference of light. The projector 766 may project light onto a screen to display an image. For example, the screen may be located inside or outside the electronic device 701. According to an embodiment of the present disclosure, the display 760 may further include a control circuit for controlling the panel 762, the hologram device 764, or the projector 766.

The interface 770 may include, for example, an HDMI 772, a USB 774, an optical interface 776, or a D-subminiature (D-sub) 778. The interface 770 may be included in, for example, the communication interface 160 illustrated in FIG. 1. Additionally or alternatively, the interface 770 may include, for example, a Mobile High-definition Link (MHL) interface, a SD card/Multi-Media Card (MMC) interface, or an Infrared Data Association (IrDA) standard interface.

The audio module 780 may execute various processes (for example, encoding or decoding) in association with bidirectional conversion of sonic waves and an audio signal. At least a few elements of the audio module 780 may be included in, for example, the electronic device of FIG. 1. The audio module 780 may process voice information input or output through, for example, a speaker 782, a receiver 784, earphones 786, the microphone 788, or the like.

The camera module 791 is a device which may photograph a still image and a video. According to an embodiment of the present disclosure, the camera module 291 may include one or more image sensors (for example, a front sensor or a rear sensor), a lens (not illustrated), an Image Signal Processor (ISP) (not illustrated) or a flash (not illustrated) (for example, an LED or xenon lamp).

The power management module 795 may manage power of the electronic device 701. Although not illustrated, the power management module 795 may include, for example, a Power Management Integrated Circuit (PMIC), a charger Integrated Circuit (IC), or a battery or fuel gauge.

The PMIC may be mounted in, for example, an integrated circuit or an SoC semiconductor. Charging methods may be classified into a wired charging method and a wireless charging method. The charger IC may charge a battery and prevent over voltage or over current from being flowed from a charger. According to an embodiment, the charger IC may include a charger IC for at least one of the wired charging method and the wireless charging method. A magnetic resonance scheme, a magnetic induction scheme, or an electromagnetic scheme may be exemplified as the wireless charging method, and an additional circuit for wireless charging, such as a coil loop circuit, a resonance circuit, a rectifier circuit, and the like, may be added.

The battery gauge may measure, for example, a remaining quantity of the battery 796, or a voltage, a current, or a temperature during the charging. The battery 796 may store or generate electricity, and may supply power to the electronic device 701 using the stored or generated electricity. The battery 796 may include, for example, a rechargeable battery or a solar battery.

The indicator 797 may display a particular state of the electronic device 701 or a part thereof (for example, the AP 710), for example, a boot-up state, a message state, a charging state, or the like. The motor 798 may convert an electrical signal to a mechanical vibration. Although not illustrated, the electronic device 701 may include a processing unit (for example, GPU) for supporting a mobile TV. The processing unit for supporting the mobile TV may process, for example, media data according to a standard of Digital Multimedia Broadcasting (DMB), Digital Video Broadcasting (DVB), media flow or the like.

The aforementioned elements of the electronic device according to various embodiments of the present disclosure may be configured with one or more components, and the name of the corresponding element may vary depending on a type of the electronic device. The electronic device may include at least one of the aforementioned elements or may further include other additional elements, or some of the aforementioned elements may be omitted. In addition, a few of component elements of an electronic device according to various embodiments of the present disclosure are coupled to form a single entity, and may equivalently execute functions of the corresponding component elements which are not coupled.

The term "a user" used in various embodiments may refer to a person who uses electronic devices or a device (e.g., an artificial intelligence electronic device) that uses electronic devices.

The term "module" used in various embodiments of the present disclosure may refer to, for example, a "unit" including one of hardware, software, and firmware, or a combination of two or more of the hardware, software, and firmware. The term "module" may be interchangeable with a term, such as a unit, a logic, a logical block, a component, a circuit, and the like. The "module" may be a minimum unit of an integrated component element or a part thereof. The "module" may be a minimum unit for performing one or more functions or a part thereof. The "module" may be mechanically or electronically implemented. For example, the "module" according to various embodiments of the present disclosure may include at least one of an Application-Specific Integrated Circuit (ASIC) chip, a Field-Programmable Gate Arrays (FPGAs), and a programmable-logic device for performing operations which have been known or are to be developed hereafter.

According to various embodiments of the present disclosure, at least part of a device (for example, modules or functions thereof) or a method (for example, operations) may be embodied by, for example, an instruction stored in a computer readable storage medium provided in a form of a programming module. When the instructions are performed by at least one processor (e.g., the processor 120), the at least one processor may perform functions corresponding to the instructions. The computer readable storage media may be, for example, the memory 130. At least a part of the programming module may be implemented (for example, executed) by, for example, the processor 120. At least a part of the programming module may include, for example, a module, a program, a routine, a set of instructions and/or a process for performing one or more functions.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include Read-Only Memory (ROM), Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

A programming module may include at least one of the described component elements, a few of the component elements may be omitted, or additional component elements may be included. Operations executed by a module, a programming module, or other component elements may be executed sequentially, in parallel, repeatedly, or in a heuristic manner. In addition, a few operations may be executed based on a different order, may be omitted, or may additionally include another operation.

According to various embodiments of the present disclosure, there is provided a storage medium, including instructions which are set to instruct at least one processor to execute at least one operation when the instructions are executed by the at least one processor, wherein the at least one operation includes detecting a plurality of touch inputs of at least one object located outside an electronic device through a touch sensor functionally connected with the electronic device, detecting a proximity input of the at least one object, and determining at least one of the plurality of touch inputs as an input for controlling the electronic device based on the proximity input.

According to various embodiments of the present disclosure, there is provided a storage medium, including instructions which are set to instruct at least one processor to execute at least one operation when the instructions are executed by the at least one processor, wherein the at least one operation includes detecting at least one object located outside the electronic device, using a touch sensor functionally connected with the electronic device, measuring a self capacitance corresponding to the at least one object through the touch sensor, determining whether to recognize a touch or a proximity of the at least one object with respect to the electronic device as an input for controlling a function of the electronic device, based on the self capacitance, and controlling the function based on the determination.

While the present disclosure has been shown and described with reference to various embodiments thereof, it will be understood by those skilled in the art that various changes in form and details may be made therein without departing from the scope of the present disclosure as defined by the appended claims.

## Claims

1. A method of obtaining an input in an electronic device, the method comprising:
detecting at least one object located outside the electronic device, using a touch sensor functionally connected with the electronic device (operation 510);
measuring a self capacitance and a mutual capacitance corresponding to the at least one object together, through the touch sensor (operation 520);
determining whether to recognize a touch or a proximity of the at least one object with respect to the electronic device as an input for controlling a function of the electronic device, based on at least the self capacitance (operation 530); and
controlling the function based on the determination (operation 540).

2. An electronic device comprising:
a touch sensor (140) configured to measure a self capacitance and a mutual capacitance corresponding to at least one external object together;
a detecting module (410) configured to detect the at least one object, using the touch sensor (140);
a determining module (420) configured to determine whether to recognize a touch or a proximity of the at least one object as an input for controlling a function of the electronic device, based on the self capacitance; and
a function control module (430) configured to control the function, based on the determination of the determining module (420).

3. The electronic device of claim 2, wherein the touch sensor (140) is further configured to alternately measure the self capacitance and the mutual capacitance at least once during a specified period.

4. The electronic device of claim 2, wherein the touch sensor (140) comprises a plurality of electrodes for measuring the self capacitance, and wherein the determining module (420) is further configured to select an electrode corresponding to the self capacitance, which satisfies a designated condition, from among the plurality of electrodes, and to determine an area where the touch or the proximity is recognized, based on the selected electrode.

5. The electronic device of claim 2, wherein the determining module (420) is further configured to determine a type of at least one object using a distribution of data associated with the self capacitance.

6. The electronic device of claim 5, wherein the determining module (420) is further configured to determine the type based on a sharpness of data corresponding to an area where the touch or the proximity is recognized among the data associated with the self capacitance; or
to determine the type further using at least one of a shape of the at least one object, a size, a movement speed, and a distance between the at least one object and another object.

7. The electronic device of claim 5 or claim 6, wherein the type of the at least one object comprises at least one of a stylus, a palm, a fingertip, a cheek, gloves, a pocket, a bag, and clothes.

8. The electronic device of claim 2, wherein the at least one object comprises at least a first object and a second object, and wherein the determining module is further configured to perform:
determining to recognize a touch or a proximity of the first object with respect to the electronic device as the input when data corresponding to the first object among data associated with the self capacitance satisfies a first condition; and
determining not to recognize a touch or a proximity of the second object with respect to the electronic device as the input when data corresponding to the second object among data associated with the self capacitance satisfies a second condition.

9. The electronic device of claim 2, wherein the determining module (420) is further configured to perform:
recognizing the touch or the proximity as the input when the data associated with the self capacitance satisfies the first condition; and
not recognizing the touch or the proximity as the input when the data associated with the self capacitance satisfies the second condition.

10. The electronic device of claim 2, wherein the determining module (420) is further configured to obtain a first area where data associated with a mutual capacitance measured through the touch sensor satisfies a first condition, to obtain a second area where data associated with the self capacitance satisfies a second condition, and to not recognize a touch or a proximity with respect to at least a part of the first area as the input, based on a distance between the first area and the second area.

11. The electronic device of claim 2, wherein the at least one object comprises at least a first object and a second object, and wherein the function control module (430) is further configured to:
execute the entire function corresponding to the input based on a determination to recognize a touch or a proximity of the first object as the input, and not execute at least a part of the function corresponding to the input based on a determination to not recognize a touch or a proximity of the second object as the input.

12. The electronic device of claim 2, wherein the electronic device further comprises a movement sensor functionally connected with the electronic device, and wherein the function control module (430) is configured to control the function based on a movement of the electronic device detected through the movement sensor, and the input.

13. The electronic device of any one of claims 8 to 10, wherein the first condition is satisfied when a sharpness of data corresponding to an area where the touch or the proximity is recognized among the data associated with the mutual capacitance or self capacitance is greater than or equal to a reference value among the data associated with the at least one object.

14. The electronic device of any one of claims 8 to 10, wherein the second condition is satisfied when a sharpness of data corresponding to an area where the touch or the proximity is recognized among the data associated with the mutual capacitance or self capacitance is less than or equal to a reference value among the data associated with the at least one object.

15. A computer-readable storage medium for storing a computer program of instructions configured to be readable by the at least one processor for instructing the at least one processor to execute a computer process in accordance with the method of claim 1.
